# FASCICULE DE BREVET EUROPEEN

(11) **EP 2 529 083 B1**
(45) Date de publication et mention de la délivrance du brevet: **29.07.2015**
(21) Numéro de dépôt: 11706889.0
(22) Date de dépôt: 28.01.2011
(51) Int. Cl.: F01D 5/30, F01D 5/08

(54) **MOYEN DE BLOCAGE D'UN FLASQUE D'ÉTANCHÉITÉ SUR UN DISQUE DE TURBINE**
VORRICHTUNG ZUR BLOCKIERUNG EINES DICHTUNGSRINGS AUF EINEM TURBINENRAD
MEANS FOR LOCKING A SEALING RING ON A TURBINE WHEEL

(30) Priorité: 29.01.2010 FR 1050628
(43) Date de publication de la demande: 05.12.2012
(73) Titulaire: Snecma, 75015 Paris (FR)
(72) Inventeur: BOSCO, Franck, Emmanuel, F-91700 Sainte Geneviève des Bois (FR)
(74) Mandataire: Gevers France
(86) Numéro de dépôt international: PCT/FR2011/050183
(87) Numéro de publication internationale: WO 2011/092439

(56) Documents cités:
- EP-A1- 1 439 282
- EP-A1- 1 584 794
- EP-A1- 1 607 579
- EP-A2- 1 096 107
- EP-A2- 1 650 406

## Description

Le domaine de la présente invention est celui des turbomachines aéronautiques, et, plus particulièrement celui des pièces constituant la ou les turbines de ces turbomachines.

Les turbomachines aéronautiques sont classiquement constituées par un ensemble de modules assemblés, comportant dans le sens de circulation de l'air, un ou plusieurs compresseurs, une chambre de combustion, une ou plusieurs turbines qui entraînent le ou les compresseurs par l'intermédiaire d'arbres d'entraînement en prélevant de la puissance sur les gaz en sortie de la chambre de combustion, et en sortie, soit une tuyère dans laquelle sont éjectés les gaz brûlés pour produire de la poussée, soit une turbine libre qui récupère l'énergie des gaz pour produire de la puissance mécanique.

Les turbines portent des aubes qui sont soumises à la forte température des gaz en sortie de la chambre de combustion et qui nécessitent d'être refroidies pour supporter les importantes contraintes thermiques et mécaniques auxquelles elles sont soumises. Cet air est prélevé en aval du ou des compresseurs et acheminé vers les aubes de turbine dans lesquelles il pénètre au niveau de leur pieds. Le fonctionnement du circuit de ventilation des aubes consiste à faire pénétrer de l'air dans le pied de l'aube, à le faire circuler dans des canaux ou des cavités et à le refaire sortir en tête de l'aube. L'air arrivant sous le pied des aubes, une étanchéité est assurée en amont et en aval du disque qui les supporte afin que l'air de refroidissement s'engage effectivement dans les canaux de refroidissement.

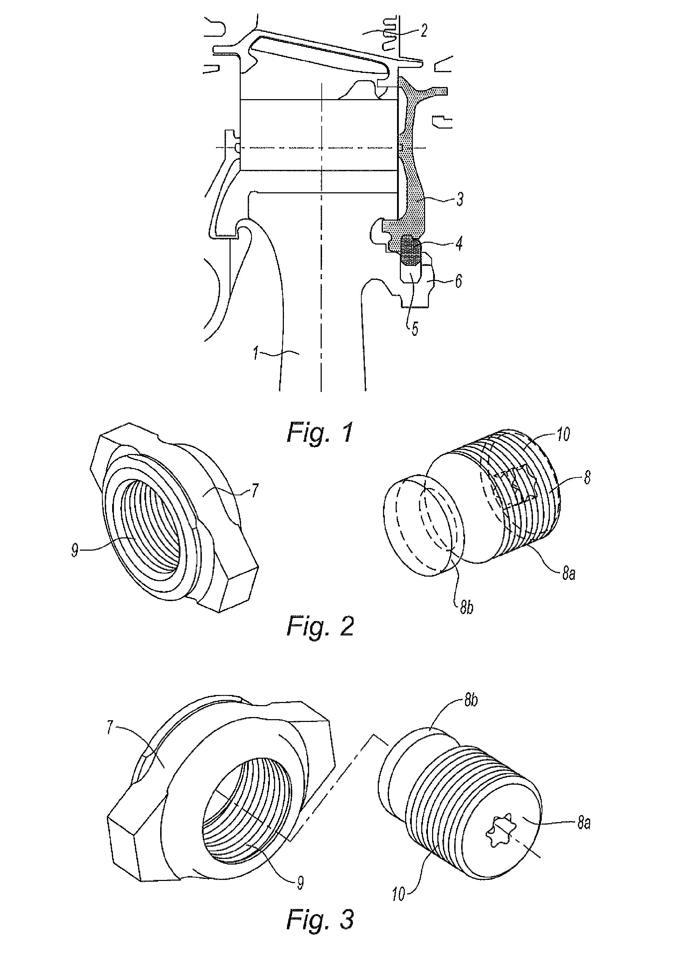

Pour assurer cette étanchéité en aval du pied des aubes on utilise, comme montré sur la figure 1, une pièce appelée flasque de turbine qui est positionnée contre la face radiale du disque et qui a pour fonction première d'assurer le maintien axial des aubes, après leur introduction dans les alvéoles du disque de turbine. Le flasque aval est maintenu en appui contre le disque, pour assurer l'étanchéité recherchée, par l'intermédiaire d'une pièce circulaire déformable, appelée jonc d'arrêt, qui est lui-même engagé dans une gorge pratiquée dans l'épaisseur du disque de turbine.

Des exemples de tels montages sont décrits dans les demandes de brevets EP 1584794, qui montre les caractéristiques techniques du préambule de la revendication indépendante 1 et EP 1439282 de la demanderesse.

Dans l'ordre de montage, le jonc d'arrêt est placé avant l'installation du flasque sur le disque. Il est maintenu en compression dans le fond de la gorge à l'aide d'un outillage, le temps d'engager le flasque. L'outillage de retenue du jonc d'arrêt est alors retiré et le jonc libéré. Le jonc se place naturellement sous le flasque, empêchant celui-ci de se désengager et assurant l'étanchéité avec le disque de turbine..

Un des inconvénients associés à ce type de montage réside dans le fait qu'il laisse un degré de liberté au flasque, qui peut, en fonctionnement, se déplacer tangentiellement. Un tel déplacement engendre des usures préjudiciables et des risques d'un maintien des aubes et/ou d'une étanchéité dégradés. Un second inconvénient provient d'une réalisation délicate du jonc et donc d'un coût de production associé important.

Enfin ce montage se caractérise par une interférence du flasque avec le moyen de serrage, avant le serrage de celui-ci, ce qui complique la mise en place du flasque.

La présente invention a pour but de remédier à ces inconvénients en proposant un moyen de verrouillage d'un flasque de turbine qui ne présente pas au moins certains des inconvénients de l'art antérieur et, en particulier, qui n'interfère pas avec le flasque lors de la mise en place de celui-ci.

A cet effet, l'invention a pour objet un moyen de mise en pression d'un flasque d'étanchéité du circuit de refroidissement des aubes d'une turbomachine contre un disque de turbine porteur desdites aubes, ledit disque portant sur sa face aval une bride annulaire orientée radialement et délimitant avec ladite face une gorge apte à recevoir ledit flasque d'étanchéité, ladite bride comportant au moins deux découpes sur sa bordure située à l'opposé du fond de la gorge, de façon à former des fenêtres d'introduction axiale dans ladite gorge pour des crabots portés par la circonférence dudit flasque faisant face à la gorge du disque, ledit moyen comportant un verrou apte à se positionner dans la gorge entre ladite face du disque et ledit flasque, caractérisé en ce qu'il comporte en outre un moyen de serrage conformé pour prendre appui contre ladite face du disque et coopérer avec ledit verrou pour assurer la mise en pression dudit flasque contre ladite bride.

La prise d'appui sur la face du disque permet d'éviter toute interférence entre le moyen de serrage et le flasque avant l'opération de serrage et donc permet une mise en place plus aisée du flasque dans la gorge du disque.

Préférentiellement le moyen de serrage est une vis et le verrou est un écrou comportant au moins une aile s'étendant tangentiellement dans la gorge.

La configuration revendiquée permet de n'effectuer que des serrages locaux, répartis sur la circonférence, sans avoir à mettre en place un verrou annulaire. Le positionnent de ces verrous est ainsi relativement aisé.

Avantageusement la vis de serrage comporte une première partie filetée apte à coopérer avec un taraudage dudit écrou et une seconde partie, d'un diamètre inférieur à celui dudit taraudage, apte à traverser ledit écrou pour prendre appui sur ladite face du disque et repousser l'écrou et le flasque contre la bride.

De façon préférentielle la face externe de la seconde partie est bombée pour coopérer avec une dépression creusée dans ladite face du disque.

L'invention porte également sur un disque de turbine pour turbomachine portant sur sa face aval une bride annulaire orientée radialement et délimitant avec ladite face une gorge apte à recevoir un flasque d'étanchéité du circuit de refroidissement des aubes portées par ledit disque, caractérisé en ce que ladite bride comporte en outre au moins une première ouverture apte à laisser le passage au moyen de serrage d'un moyen de mise en pression tel que décrit ci-dessus

Elle porte encore sur un flasque d'étanchéité du circuit de refroidissement des aubes d'une turbomachine de forme annulaire, comportant des crabots sur une de ses circonférences, caractérisé en ce qu'au moins un des crabots comporte une seconde ouverture apte à laisser le passage au moyen de serrage d'un moyen de mise en pression tel que décrit ci-dessus, de façon à permettre audit moyen de serrage de prendre appui sur la face aval du disque porteur desdites aubes.

Elle porte aussi sur un tel disque de turbine équipé d'un tel flasque, le flasque étant maintenu contre une bride annulaire dudit disque par un moyen de mise en pression tel que décrit ci-dessus.

L'invention porte enfin sur un module de turbine d'une turbomachine comportant un tel disque et sur une turbomachine comportant un tel module de turbine.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue en coupe d'un dispositif de fixation d'un flasque sur un disque de turbine, selon l'art antérieur ;
- la figure 2 est une vue en perspective selon une première direction d'un verrou de flasque et de sa vis de blocage, selon un mode de réalisation de l'invention ;
- la figure 3 est une vue en perspective selon une seconde direction d'un verrou de flasque et de sa vis de blocage, selon un mode de réalisation de l'invention ;
- la figure 4 est une vue en perspective, selon les deux directions précédentes, d'un verrou de flasque et de sa vis de blocage, selon un mode de réalisation de l'invention, après assemblage ;
- la figure 5 est une vue en perspective d'un flasque selon un mode de réalisation de l'invention ;
- la figure 6 est une vue en perspective d'un détail d'un flasque selon un mode de réalisation de l'invention ;
- la figure 7 est une vue en coupe d'un disque de turbine équipé d'un flasque immobilisé par un verrou de flasque selon un mode de réalisation de l'invention ;
- la figure 8 est une vue en perspective d'un détail d'un disque de turbine équipé d'un flasque immobilisé par un verrou de flasque selon un mode de réalisation de l'invention ;
- la figure 9 est une vue en perspective d'un détail d'un disque de turbine dans la gorge duquel est positionné un verrou de flasque selon un mode de réalisation de l'invention ;
- la figure 10 est une vue en perspective d'un détail d'un flasque et d'un disque de turbine, dans la gorge duquel est positionné un verrou de flasque selon un mode de réalisation de l'invention ;
- la figure 11 est une vue en perspective d'un détail d'un flasque engagé dans la gorge d'un disque de turbine, selon un mode de réalisation de l'invention ;
- la figure 12 est une vue en perspective d'un détail d'un flasque à sa position définitive dans la gorge d'un disque de turbine, selon un mode de réalisation de l'invention ;
- la figure 13 est une vue en perspective d'un détail d'un flasque à sa position définitive dans la gorge d'un disque de turbine et de sa vis de blocage, avant fixation.

En se référant à la figure 1, on voit un disque de turbine 1 selon l'art antérieur, portant une aube 2, contre lequel est appliqué un flasque de turbine 3 qui assure le maintien en position des aubes 2 dans les alvéoles du disque 1 et qui force la circulation d'air de refroidissement dans les canaux de ventilation de ces aubes en formant une barrière d'étanchéité pour cet air en aval du disque. Le flasque 3 est mis en pression contre la face radiale du disque 1 et maintenu en place par un jonc d'arrêt 4. Ce jonc est engagé dans une gorge 5 formée latéralement à la face radiale du disque par l'intermédiaire d'une bride 6 formant un ressaut orienté parallèlement à la face du disque. La bride ne s'étend pas diamétralement au-delà du diamètre intérieur du flasque 3 de façon que celui-ci puisse être mis en place contre le disque lors du montage. Le jonc 4 a une forme circulaire interrompue et est déformable à l'aide d'un outil approprié, pour que son diamètre puisse être resserré et qu'il puisse être engagé dans la gorge 5 et laisser le passage au flasque 3 lors de son installation contre le disque 1.

En se référant maintenant aux figures 2 à 4 on voit un ensemble selon l'invention, constitué d'un verrou de flasque 7 et d'une vis de blocage 8 de ce verrou. Le verrou a la forme d'un cylindre creux dont la hauteur est légèrement inférieure à la largeur de la gorge 5 et qui se prolonge latéralement par deux ailes 7a et 7b ayant pour fonctions d'empêcher la rotation du verrou lorsqu'il est en position dans la gorge 5 et de presser le flasque 3 contre le disque en fin de montage. Le diamètre intérieur du verrou comporte un taraudage 9 apte à coopérer avec un filetage correspondant 10 sur la partie externe de la vis de blocage 8.

La vis de blocage 8 comporte une première partie cylindrique 8a porteuse du filetage 10 et se poursuit par une seconde partie cylindrique 8b reliée à la première partie 8a par un pont de raccordement (non représenté sur les figures 2 à 4). Sur sa face externe la première partie cylindrique comporte un moyen classique d'accueil d'un moyen d'entraînement de la vis tel qu'un tournevis. La seconde partie cylindrique a un diamètre légèrement inférieur à celui de la première partie 8a de façon qu'elle traverse librement le taraudage 9. La face externe de la seconde partie 8b est, quant à elle légèrement bombée (sans que cela soit impératif) de façon à s'adapter à une dépression creusée à cet effet dans la face latérale du disque de turbine 1.

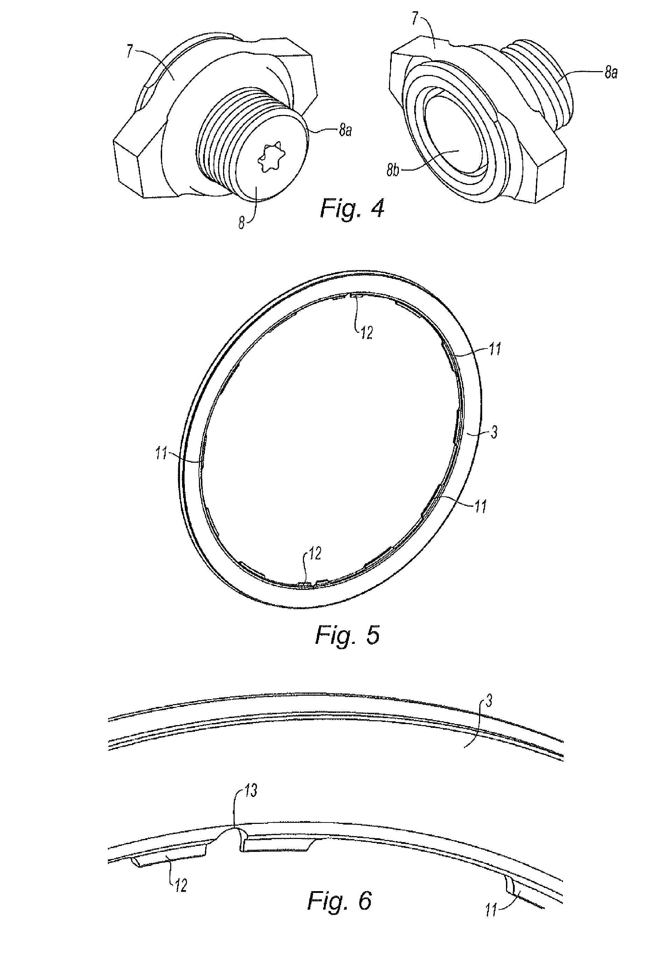

En se référant aux figures 5 et 6 on voit un flasque de turbine 3 qui a sensiblement la forme d'un disque plat comportant, régulièrement répartis sur son bord interne, des excroissances radiales ou crabots 11. Deux de ces crabots 12, diamétralement opposés, sont découpés selon une encoche 13, de type fraisage, dont le diamètre est supérieur à celui de la vis de blocage 8 et qui est destinée à laisser le passage à l'une d'elles.

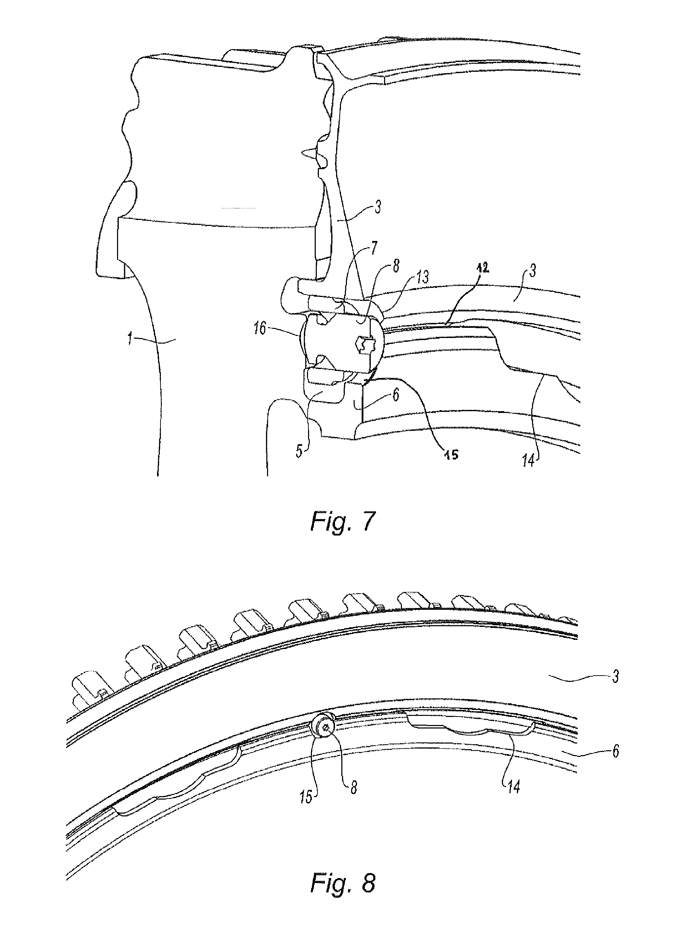

Les figures 7 et 8 montrent un disque 1 équipé d'un flasque 3 maintenu en place par un verrou 7 associé à sa vis de blocage 8. Le disque 1 comporte sur la bride 6 des fenêtres d'introduction 14 dont le nombre et les secteurs angulaires correspondent à ceux des crabots 11 du flasque. De plus, deux dépressions en forme de lunules 16 sont creusées dans l'épaisseur du disque 1, en face d'une encoche 15 pratiquée axialement sur cette bride. Ces lunules ont préférentiellement, en creux, une forme analogue à la forme bombée de la face externe de la seconde partie 8b de la vis de blocage. Par ailleurs, le verrou 7 et sa vis de blocage 8 sont prévus pour traverser le flasque au niveau de son encoche 13 et la bride 6 du disque au niveau de son encoche 15.

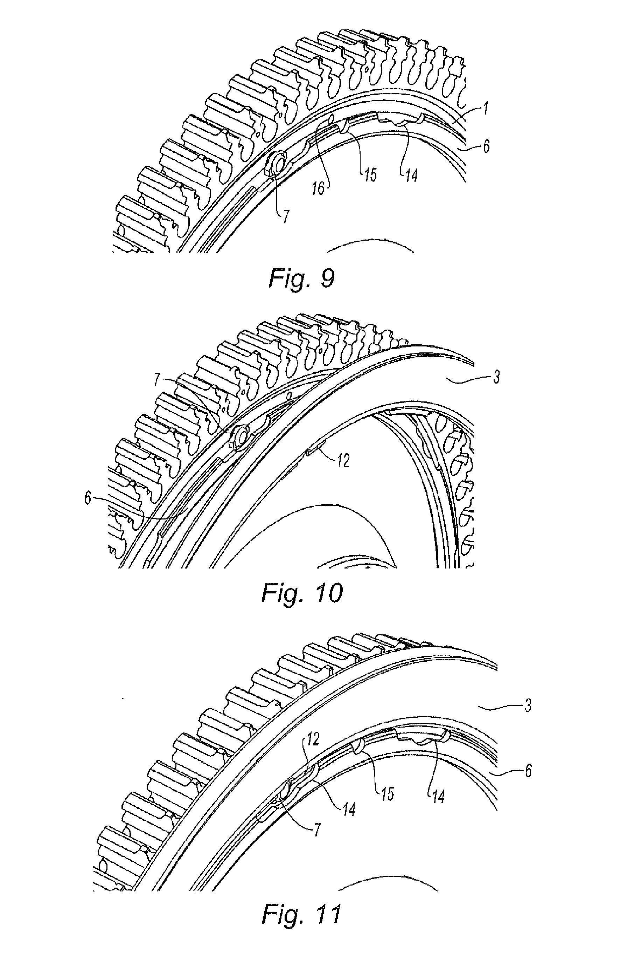

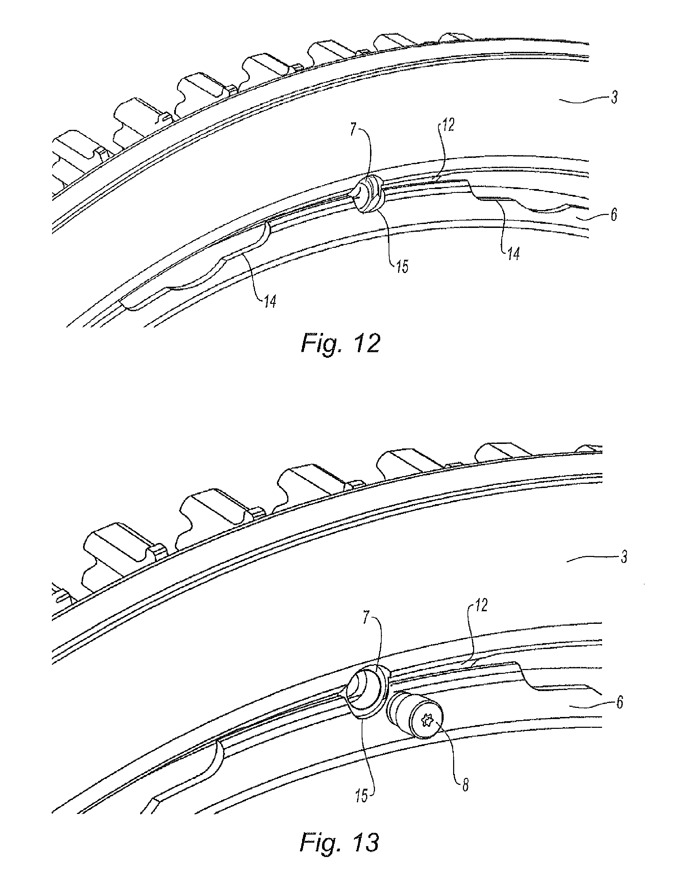

Les figures 9 à 13 montrent les étapes successives d'installation d'un flasque d'étanchéité 3 sur un disque 1, et celles-ci vont maintenant être présentées en détail.

Par rapport à l'art antérieur, le disque 1, par comparaison avec les disques de l'art antérieur, comporte des fenêtres d'introduction 14 découpées dans la surface externe de la bride 6, deux premières encoches 15 diamétralement opposées et deux lunules 16 situées sur la face du disque en regard des deux premières encoches 15.

De même, le flasque 3 selon l'invention est modifié en ce qu'il présente des crabots 11 répartis régulièrement sur la circonférence de son diamètre intérieur. Ces crabots ont vocation à se positionner derrière la bride 6 du disque 1, entre les fenêtres d'introductions 14 et à servir de point d'appui au flasque lorsqu'il est appliqué en pression contre la paroi de la bride 6 qui débouche sur la gorge 5. Comme indiqué précédemment deux secondes encoches 13, sans que ce nombre de deux soit impératif, sont pratiquées dans des crabots 12 diamétralement opposés.

Le montage du flasque sur le disque débute par la mise en place de deux verrous 7 dans la gorge 5 du disque 1, de préférence au niveau d'une fenêtre d'introduction 14 proche d'une des deux lunules 16. Ces lunules correspondent en effet à la position finale qu'auront les verrous en fin de montage. Le flasque 3 est ensuite introduit lui aussi dans cette gorge 5, les crabots 11 étant positionnés en face des fenêtres d'introduction 14 et les deux crabots 12 présentant une encoche 13 étant quant à eux positionnés en face des deux verrous 7.

La seconde étape du montage consiste à faire tourner le flasque 3 et chaque verrou 7 dans la gorge pour que ceux-ci et les secondes encoches 13 viennent se placer en face des premières encoches 15 et des lunules 16.

Dans cette position il est possible de faire passer la vis de blocage 8 à travers l'encoche 15 de la bride 6 et d'engager son filetage dans le taraudage 9 du verrou 7. Lors de son vissage la vis 8 s'enfonce tout d'abord dans la gorge 5 jusqu'à ce que sa seconde partie 8b vienne en butée contre la face du disque 1 au niveau de la lunule 16. Puis la pression appliquée par le vissage tend à affiner le positionnement du flasque 3 en faisant venir la forme bombée de la seconde partie 8b de la vis 8 très exactement en face de la lunule 16. Enfin, l'extrémité de la vis étant en butée dans la lunule, le vissage provoque le déplacement du verrou 7 dans un sens d'éloignement de celui-ci de la face portant la lunule 16. Ses ailes 7a et 7b entraînent simultanément le flasque 3 qu'elles serrent contre la bride 6. Lorsque le verrou 7 et ses ailes arrivent en butée contre la bride 6, sa rotation s'arrête et il crée une pression d'appui du flasque sur la bride, sous l'action du couple de serrage appliqué à la vis 8. Le dimensionnement du filetage 10 sur la vis 8 et du taraudage 9 sur le verrou 7 est réalisée de façon que le déplacement du flasque soit minimal et qu'ainsi la fonction d'étanchéité entre le flasque 3 et le disque 1 ne soit pas dégradée.

La pression contre la bride appliquée sur le flasque 3 permet un bon maintien du flasque et évite toute rotation de celui-ci, ce qui élimine les inconvénients rencontrés dans l'art antérieur.

Le recul du flasque 3 par rapport à la face du disque 1 lors du serrage de la vis de blocage 8 n'entraîne pas de conséquence défavorable sur l'étanchéité du circuit de refroidissement des aubes ni sur le blocage axial des aubes car le flasque est positionné en force, c'est à dire plaqué contre le disque avec une déformation élastique. L'étanchéité est en outre maintenue, même si le flasque recule, par une languette d'étanchéité appuyée en force dans une gorge du disque.

L'invention a été décrite avec la mise en place de deux verrous diamétralement opposés. Il est bien évident qu'elle peut tout aussi bien être réalisée avec un nombre plus élevé de verrous, qui seront positionnés de préférence, mais de façon non impérative, régulièrement sur la circonférence du disque 1 et du flasque 3.

Bien que l'invention ait été décrite en relation avec un mode de réalisation particulier, il est bien évident qu'elle comprend tous les équivalents techniques des moyens décrits ainsi que leurs combinaisons si celles-ci entrent dans le cadre de l'invention.

## Revendications

1. Moyen de mise en pression d'un flasque d'étanchéité (3) du circuit de refroidissement des aubes d'une turbomachine contre un disque de turbine (1) porteur desdites aubes, ledit disque portant sur sa face aval une bride annulaire (6) orientée radialement et délimitant avec ladite face une gorge (5) apte à recevoir ledit flasque d'étanchéité (3), ladite bride comportant au moins deux découpes sur sa bordure située à l'opposé du fond de la gorge (5), de façon à former des fenêtres (14) d'introduction axiale dans ladite gorge pour des crabots (11) portés par la circonférence dudit flasque (3) faisant face à la gorge (5) du disque (1), ledit moyen comportant un verrou (7) apte à se positionner dans la gorge (5) entre ladite face du disque et ledit flasque,
**caractérisé en ce qu'**il comporte en outre un moyen de serrage (8) conformé pour prendre appui contre ladite face du disque (1) et coopérer avec ledit verrou pour assurer la mise en pression dudit flasque (3) contre ladite bride (6).

2. Moyen de mise en pression selon la revendication 1 dans lequel le moyen de serrage est une vis (8) et le verrou est un écrou (7) comportant au moins une aile s'étendant tangentiellement dans la gorge (5).

3. Moyen de mise en pression selon la revendication 2 dans lequel la vis de serrage (8) comporte une première partie filetée (8a) apte à coopérer avec un taraudage (9) dudit écrou et une seconde partie (8b), d'un diamètre inférieur à celui dudit taraudage, apte à traverser ledit écrou pour prendre appui sur ladite face du disque et repousser l'écrou (7) et le flasque (3) contre la bride (6).

4. Moyen de mise en pression selon la revendication 3 dans lequel la face externe de la seconde partie (8b) est bombée pour coopérer avec une dépression (16) creusée dans ladite face du disque.

5. Disque de turbine pour turbomachine portant sur sa face aval une bride annulaire (6) orientée radialement et délimitant avec ladite face une gorge (5) apte à recevoir un flasque d'étanchéité (3) du circuit de refroidissement des aubes portées par ledit disque (1), **caractérisé en ce que** ladite bride (6) comporte en outre au moins une première ouverture (15) apte à laisser le passage au moyen de serrage (8) d'un moyen de mise en pression selon l'une des revendications 1 à 4.

6. Flasque d'étanchéité du circuit de refroidissement des aubes d'une turbomachine de forme annulaire, comportant des crabots (11) sur une de ses circonférences, **caractérisé en ce qu'**au moins un des crabots (12) comporte une seconde ouverture (13) apte à laisser le passage au moyen de serrage (8) d'un moyen de mise en pression selon l'une des revendications 1 à 4, de façon à permettre audit moyen de serrage de prendre appui sur la face aval du disque (1) porteur desdites aubes.

7. Disque de turbine selon la revendication 5 équipé d'un flasque (3) selon la revendication 6 maintenu contre une bride annulaire (6) dudit disque par un moyen de mise en pression selon l'une des revendications 1 à 4.

8. Module de turbine d'une turbomachine comportant un disque équipé selon la revendication 7.

9. Turbomachine comportant un module de turbine selon la revendication précédente.

## Patentansprüche

1. Mittel zur Druckbeaufschlagung eines Dichtflansches (3) des Kühlkreislaufs der Schaufeln einer Turbomaschine gegen eine Turbinenscheibe (1), die diese Schaufeln trägt, wobei die Scheibe auf ihrer nachgelagerten Seite einen ringförmigen Flansch (6) trägt, der radial orientiert ist, und mit dieser Seite eine Nut (5) abgrenzt, die geeignet ist, den Dichtflansch (3) aufzunehmen, wobei der Flansch mindestens zwei Ausschnitte auf seinem Rand aufweist, der der Unterseite der Nut (5) gegenüberliegend angeordnet ist, um Fenster (14) zum axialen Einführen in die Nut für Klauen (11) zu bilden, die von dem Umfang des Flansches (3) getragen sind, der zu der Nut (5) der Scheibe (1) zeigt, wobei das Mittel einen Riegel (7) aufweist, der geeignet ist, sich in der Nut (5) zwischen der Seite der Scheibe und dem Flansch zu positionieren,
**dadurch gekennzeichnet, dass** es außerdem ein Klemmmittel (8) aufweist, das gebildet ist, um sich gegen die Seite der Scheibe (1) abzustützen und mit dem Riegel zusammen zu wirken, um die Druckbeaufschlagung des Dichtflansches (3) gegen den Flansch (6) zu gewährleisten.

2. Mittel zur Druckbeaufschlagung nach Anspruch 1, wobei das Klemmmittel eine Schraube (8) ist und der Riegel eine Mutter (7) ist, die mindestens einen Flügel aufweist, der sich tangential in der Nut (5) erstreckt.

3. Mittel zur Druckbeaufschlagung nach Anspruch 2, wobei die Klemmschraube (8) einen ersten Gewindeabschnitt (8a), der geeignet ist, mit einem Innengewinde (9) der Mutter zusammenwirken, und einen zweiten Abschnitt (8b) mit einem Durchmesser, der kleiner als jener des Innengewindes ist, aufweist, der geeignet ist, durch die Mutter durch zu gehen, um sich auf der Seite der Scheibe abzustützen und die Mutter (7) und den Dichtflansch (3) gegen den Flansch (6) zu drücken.

4. Mittel zur Druckbeaufschlagung nach Anspruch 3, wobei die Außenseite des zweiten Abschnitts (8b) gewölbt ist, um mit einer Mulde (16) zusammenzuwirken, die in der Fläche der Scheibe ausgehöhlt ist.

5. Turbinenscheibe für eine Turbomaschine, die auf ihrer nachgelagerten Seite einen ringförmigen Flansch (6) trägt, der radial orientiert ist, und mit dieser Seite eine Nut (5) abgrenzt, die geeignet ist, einen Dichtflansch (3) des Kühlkreislaufs der Schaufeln aufzunehmen, die von der Scheibe (1) getragen sind, **dadurch gekennzeichnet, dass** der Flansch (6) außerdem mindestens eine erste Öffnung (15) aufweist, die geeignet ist, dem Klemmmittel (8) den Durchgang eines Mittels zur Druckbeaufschlagung nach einem der Ansprüche 1 bis 4 zu ermöglichen.

6. Ringförmiger Dichtflansch des Kühlkreislaufs der Schaufeln einer Turbomaschine, der Klauen (11) auf einem seiner Umfänge aufweist, **dadurch gekennzeichnet, dass** mindestens eine der Klauen (12) eine zweite Öffnung (13) aufweist, die geeignet ist, dem Klemmmittel (8) den Durchgang eines Mittels zur Druckbeaufschlagung nach einem der Ansprüche 1 bis 4 zu ermöglichen, um dem Klemmmittel zu erlauben, sich auf der nachgelagerten Seite der Scheibe (1) abzustützen, die die Schaufeln trägt.

7. Turbinenscheibe nach Anspruch 5, die mit einem Dichtflansch (3) nach Anspruch 6 ausgestattet ist, der durch ein Mittel zur Druckbeaufschlagung nach einem der Ansprüche 1 bis 4 gegen einen ringförmigen Flansch (6) der Scheibe gehalten ist.

8. Turbinenmodul einer Turbomaschine, umfassend eine Scheibe, die nach Anspruch 7 ausgestattet ist.

9. Turbomaschine, umfassend ein Turbinenmodul nach dem vorhergehenden Anspruch.

## Claims

1. A means of pressing a sealing ring (3) of a turbomachine blade-cooling circuit against a turbine disk (1) bearing said blades, said disk on its downstream face bearing an annular flange (6) oriented radially and delimiting, with said face, a groove (5) able to accept said sealing ring (3), said annular flange comprising at least two cutouts on its periphery situated opposite the bottom of the groove (5) so as to form apertures (14) via which lugs (11) borne by the circumference of said sealing ring (3) facing the groove (5) of the disk (1) can enter said groove axially, said means comprising a lock (7) able to be positioned in the groove (5) between said face of the disk and said sealing ring,
**characterized in that** it further comprises a clamping means (8) configured to rest against said face of the disk (1) and collaborate with said lock in order to press said sealing ring (3) against said annular flange (6).

2. The pressing means as claimed in claim 1, in which the clamping means is a screw (8) and the lock is a nut (7) having at least one wing extending tangentially into the groove (5).

3. The pressing means as claimed in claim 2, in which the clamping screw (8) comprises a threaded first part (8a) able to collaborate with a tapped thread (9) of said nut, and a second part (8b), of a diameter smaller than that of said tapped thread, able to pass through said nut to rest against said face of the disk and push the nut (7) and the sealing ring (3) back against the annular flange (6).

4. The pressing means as claimed in claim 3, in which the external face of the second part (8b) is domed to collaborate with a depression (16) hollowed into said face of the disk.

5. A turbine disk for a turbomachine bearing, on its downstream face, an annular flange (6) oriented radially and delimiting, with said face, a groove (5) able to accept a sealing ring (3) of the cooling circuit for the blades carried by said disk (1), **characterized in that** said annular flange (6) further comprises at least one first opening (15) capable of allowing the clamping means (8) of a pressing means as claimed in one of claims 1 to 4, to pass through it.

6. A sealing ring of annular shape for sealing a turbomachine blade-cooling circuit, comprising lugs (11) on one of its circumferences, **characterized in that** at least one of the lugs (12) comprises a second opening (13) able to allow the clamping means (8) of a pressing means as claimed in one of claims 1 to 4 to pass through it to allow said clamping means to rest against the downstream face of the disk (1) that bears said blades.

7. The turbine disk as claimed in claim 5, equipped with a sealing ring (3) as claimed in claim 6, held against an annular flange (6) of said disk by a pressing means as claimed in one of claims 1 to 4.

8. A turbomachine turbine module comprising a disk equipped as claimed in claim 7.

9. A turbomachine comprising a turbine module as claimed in the preceding claim.
